# EUROPEAN PATENT SPECIFICATION

(11) **EP 4 230 970 B1**
(45) Date of publication and mention of the grant of the patent: **21.01.2026**
(21) Application number: 23156785.0
(22) Date of filing: 15.02.2023
(51) Int. Cl.: G01F 15/18, G01F 1/66

(54) **DEVICE FOR MEASURING A FLUID, PREFERABLY A LIQUID**
VORRICHTUNG ZUR MESSUNG EINES FLUIDS, VORZUGSWEISE EINER FLÜSSIGKEIT
DISPOSITIF DE MESURE D'UN FLUIDE, DE PRÉFÉRENCE D'UN LIQUIDE

(30) Priority: 16.02.2022 IT 202200002867
(43) Date of publication of application: 23.08.2023
(73) Proprietor: Pietro Fiorentini S.p.A., 36057 Arcugnano (VI) (IT)
(72) Inventor: IMBOCCIOLI, Claudio, 36051 CREAZZO (VICENZA) (IT); MIORIN, Enrico, 36057 Arcugnano (VI) (IT)
(74) Representative: Braidotti, Andrea

(56) References cited:
- EP-A1- 2 594 907
- EP-A1- 3 037 790
- EP-A1- 3 502 632
- WO-A1-2020/074050
- CN-A- 108 151 813
- CN-U- 206 573 171
- DE-A1- 102007 019 689

## Description

### FIELD OF TECHNIQUE

The present invention relates to a device for measuring a fluid, preferably a liquid and, more preferably, water.

In particular, the device is of the type suitable for measuring one or more quantities relating to a fluid which passes through said device, and more specifically, it is suitable for measuring at least the flow rate and/or flow of the fluid which passes through the device. Preferably, said fluid is a liquid and, in particular, it is water. Preferably, said device is a water meter and, in particular, it is also called "water meter". Conveniently, the device can be used for the measurement of other fluids, such as natural gas or other gases produced in a decentralized way, such as biomethane, hydrogen, or multiphase mixtures.

Therefore, the invention finds advantageous use in the technical sector of the production and marketing of apparatus and devices for measuring fluids and can be advantageously used both at the domestic level and at the industrial level. Conveniently, the device according to the invention can be used for counting water consumption in a domestic water system or in an industrial water system, or for counting water consumption in general, for example from a container, or for counting the calories deriving from a vector fluid of a thermal/thermo-hydraulic system.

### STATE OF THE ART

Various metering devices are currently known for measuring the flow of water through the device itself, and this in particular for the purpose of counting water consumption.

Among the various water metering devices of known typology there are ultrasonic, turbine, rotoid and calibrated orifice ones.

In particular, known water meter devices are equipped with a passage duct, defined by a tubular body, which is configured to allow the passage of the water to be measured, and comprise at least one sensor mounted and/or associated with the flow duct passage for measuring and thus detecting quantities of water.

Known devices of the "smart meter" type are normally equipped with at least one containment structure, which contains within it at least one electronic control unit, for example a pre-printed card with a microcontroller, and which is associated with the passage tube in through which the water to be measured and counted flows.

In particular, in the case of ultrasonic measuring devices, at least two ultrasonic sensors are mounted on or in correspondence with said water passage duct, in particular at least one ultrasonic emitter and at least one ultrasonic receiver.

In more detail, in some known solutions, the ultrasonic sensors are mounted on the passage tube in an angular position rotated laterally by 90° to the containment structure. However, these solutions are not optimal since the assembly, in particular in line, is particularly complex.

In particular, in these solutions, the assembly of the sensors inside the passage tube and therefore of the passage of the electric cables inside the containment structure is complex and laborious, since it is first necessary to pass the cables inside the hole made on the containment structure, keeping the sensors rotated, which can only then be housed in their respective seats.

A further drawback lies in the fact that the assembly of the aforesaid known devices, and in particular the assembly of the passage duct to the containment structure together with the sensors, is a long and laborious operation which must necessarily be carried out manually by an operator, increasing assembly times and costs.

Solutions have therefore already been proposed in which the ultrasonic sensors are mounted on the passage duct below the containment structure (i.e. defining an angle of 0°) and are electrically connected to the electronic control unit by means of electric cables or metal contacts placed crossing holes made in a plastic bottom wall of the containment structure. This method of positioning the ultrasonic sensors simplifies and speeds up the assembly of the device as there is easier access directly from above and, moreover, there is no need to rotate the passage duct, however it poses more critical issues in terms of of insulation of the inside of the containment structure in which the electronic part is contained.

Therefore, in order to guarantee suitable insulation of the inside of the containment structure, devices of the known type necessarily require a layer of insulating material (known in the technical jargon of the sector with the term "potting"), in particular a resin or a two-component glue, which fills the holes through which the electrical connection cables pass and/or an internal part of the containment structure. Currently, therefore, the potting operation - which is a particularly long and expensive operation - is in any case essential in known devices, in particular in those in which the sensors are mounted below the bottom of the containment structure.

Furthermore, in known devices in which the sensors are mounted below the containment structure, the plastic bottom of the latter - being in direct contact with the sensors - is strongly stressed by the thrust that the sensors themselves undergo due to the pressurized water flowing inside the passage duct. This inevitably causes a deformation of the plastic bottom and a consequent movement of the sensors inside their respective seats, thus making the measurement less precise.

In other known solutions, the plastic containment structure contains both the electronic card and the sensors and it is then this structure which is fixed to the brass passage tube by means of screws; suitably, in these solutions, metallic stiffening elements are provided in correspondence with the housing seats of the sensors, which are overmolded to the plastic, thus making the process particularly expensive.

In other known solutions a dedicated metal flange is provided which keeps the sensors in position by coming into direct contact with the latter and closing them within respective seats formed in the passage duct; on the other face of the metal flange the plastic containment structure, filled with potting, for the electronic components is then associated by hooking; this solution, in addition to necessarily requiring the use of the long and expensive potting process, involves a clear separation between the measuring part, with the water passage duct and the sensors, and the casing of the containment structure containing the electronic part of the device.

A further drawback lies in the fact that the devices of the known type provide for the presence of an external/further casing with respect to the containment structure, which has the purpose of protecting the electric cables and the purpose of protecting against tampering, which increases the construction complexity and the production costs of the device itself.

EP2594907 describes a solution in which the use of at least one dedicated stiffening element is envisaged to reinforce the containment structure in order to absorb the forces deriving from the pressure peaks of the fluid passing through the duct. In particular, the stiffening element can be defined by a lamina which is fixed externally below the bottom of the casing of the containment structure or it can be defined by two bars which are configured to be inserted into respective through slots formed at the inside the bottom of the casing of the containment structure so as to protrude with their ends from said slits; in more detail, the containment structure and the two mounting bars are fixed to the fluid passage duct by means of screws which pass through corresponding holes made in the ends of the bars which protrude from the through slots made inside the bottom of the enclosure of the mounting containment structure. In essence, the stiffening elements - which also serve as a connection between the containment structure and the passage duct - are fixed to the latter externally with respect to the housing volume of the containment structure, thus making tampering easier and thus entailing obvious anti-burglary issues (or requesting the addition of anti-burglary seals dedicated to the purpose).

EP3502632 describes a solution in which nuts are provided which are housed inside the containment structure and which are screwed onto the end threaded portion of corresponding sensor bodies, which are also provided with respective lips which are intended to rest against the outer surface of the bottom of the containment structure; moreover, the sensor bodies are provided with a further threaded portion which is configured to be screwed into corresponding portions, internally threaded, protruding from the fluid passage duct. Basically, the sensor bodies are used to fix the containment structure to the fluid passage duct. In a further variant, the same sensor bodies are housed inside the containment structure and are provided with threaded portions configured to be screwed into corresponding portions, internally threaded, protruding from the fluid passage duct; in this variant, therefore, the bottom of the containment structure is clamped between the sensor bodies housed inside the structure itself and the protruding portions of the fluid passage duct.

EP3037790 describes a solution in which the containment structure is fixed to the unit provided with the fluid passage duct by means of four bolts which are housed inside the containment structure and which, passing through the bottom of the containment structure, then engage within corresponding threaded holes formed on the unit defining the fluid passage duct.

CN206573171 describes a solution in which the fluid passage duct is inserted inside a containment structure which is defined by two elements and, in particular, by a first element which is open at the bottom and by a second element which closes the bottom at the first element so as to define the bottom of the containment structure and so that the passage duct is thus enclosed between said two elements; the fluid passage duct is fixed to the first element, open at the bottom, by means of bolts which pass through a lower wall of the first element to then engage in corresponding threaded holes formed in the fluid passage duct.

CN108151812 describes a solution in which a plate is positioned externally to the containment structure and, in particular, is positioned externally between the bottom of the containment structure and the fluid passage duct.

### OBJECTS OF THE INVENTION

The object of the invention is to propose a device for measuring a fluid, preferably a liquid, and more preferably water, which makes it possible to overcome, at least in part, the aforementioned drawbacks present in the solutions of the prior art mentioned above.

Another object of the invention is to propose a device which can be mounted and assembled quickly and simply, in particular by obviating the need to rotate the sensors with respect to the containment structure.

Another object of the invention is to propose a device which can be mass-produced and assembled quickly and efficiently.

Another object of the invention is to propose a device which, over time, provides particularly precise measurements.

Another object of the invention is to propose a device in which the inside of its containment structure is suitably insulated with respect to the external environment and also sealed with respect to the fluid which passes through the duct with which the device is provided.

Another object of the invention is to propose a device which is more complicated to tamper with and/or alter.

Another object of the invention is to propose a device which does not necessarily require the presence of a layer of insulating material inside the containment structure.

Another object of the invention is to propose a device which is structurally and functionally completely reliable.

Another object of the invention is to propose a device which is an improvement and/or alternative to the traditional ones.

Another object of the invention is to propose a device which has high standards of safety and operability.

Another object of the invention is to propose a device which can be manufactured simply, rapidly and at low cost.

Another object of the invention is to propose a device which presents an alternative characterization, both in constructive and functional terms, with respect to the traditional ones.

### SUMMARY OF THE INVENTION

All the purposes mentioned here, considered both individually and in any combination thereof, and others which will result from the following description are achieved, according to the invention, with a device as defined in claim 1.

In particular, the present invention relates to a device for measuring a fluid, preferably a liquid, in particular of the type suitable for measuring the flow rate and/or flow of a fluid circulating inside a duct and through the device itself; said device includes:
- at least one containing structure, internally defining a housing volume and comprising a bottom wall, which is provided with a first surface facing internally with respect to said housing volume and a second surface facing externally with respect to said housing volume, the containment structure being leakproof to prevent the outward leakage of liquid and/or the ingress of liquid from the outside into the interior of the housing volume;
- at least one unit for the passage of said fluid, comprising:
   - a duct internally delimiting a path extending along a flow direction (X) between an inlet port for said fluid and an outlet port for said fluid, and
   - at least one abutment portion mechanically connectable to said bottom wall of said containment structure at said second surface;
- at least one clamping element housed inside said housing volume of said containment structure so as not to be accessible from the outside of said containment structure:
- sensor means which are structurally distinct from said at least one clamping element and which are configured to measure at least one flow rate and/or flow of the fluid passing through the duct of said unit,
   and wherein: - said bottom wall is clamped between said clamping member and said abutment portion of said unit,
- said at least one abutment portion is in direct contact with the bottom wall of the containment structure,
- said sensor means are mounted, entirely or for the most part, in corresponding seats obtained in said at least one abutment portion of the unit for the passage of said fluid and being blocked inside the corresponding seats by said bottom wall of said containment structure and/or by said at least one clamping element.

### DESCRIPTION OF THE FIGURES

The present invention is hereinafter further clarified in some of its preferred embodiments shown for purely exemplifying and non-limiting purposes with reference to the attached table of drawings, in which:
- Figure 1A: shows a perspective view of the device for measuring a fluid according to the invention,
- Figure 1B: shows an exploded perspective view of the device, with some parts removed to better highlight others;
- Figure 2: shows a perspective view of a clamping element, in a second embodiment thereof, of the device according to the invention;
- Figure 3: shows a perspective view of the clamping element, in a third embodiment thereof, of the device according to the invention;
- Figure 4A: shows a perspective view of the clamping element, in a fourth embodiment thereof, of the device according to the invention;
- Figure 4B: shows a perspective view of the clamping element, in a fifth embodiment thereof, of the device according to the invention;
- Figure 5A: shows a perspective view of a further element, in a second embodiment thereof, with which the device according to the invention is provided;
- Figure 5B: shows a perspective view of a further element, in a third embodiment thereof, with which the device according to the invention is provided;

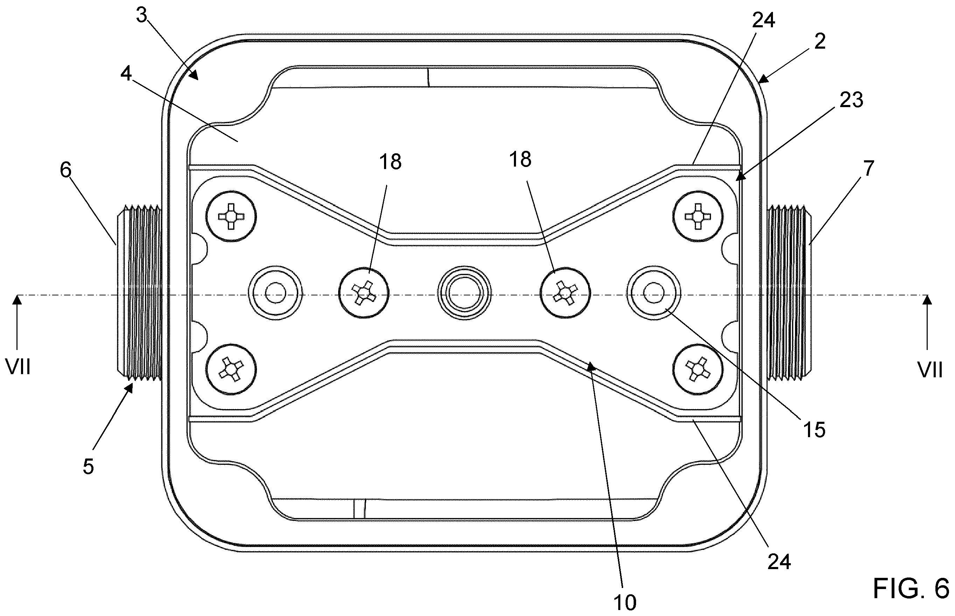

- Figure 6: shows a top plan view of the device for measuring a fluid according to the invention, without the lid,
- Figure 7: shows the device for measuring a fluid according to the invention according to a section through the device itself along line VII-VII of figure 6,
- Figure 8: shows a different embodiment of the device for measuring a fluid according to the invention, with the clamping elements of fig. 4B, according to a section which passes through the corresponding device itself along a track corresponding to track VII-VII of the embodiment of figure 6,
- Figure 9: shows a variant of the device of fig. 8, and
- Figure 9A: shows an enlarged detail of fig. 9.

### DETAILED DESCRIPTION OF THE INVENTION AND SOME PREFERRED EMBODIMENTS

The present invention relates to a device for measuring a fluid, preferably a liquid, and more preferably water, which has been identified as a whole with the reference number 1 in the attached figures.

Conveniently, the device is of the type suitable for measuring one or more quantities relating to a fluid which passes through said device, and more specifically, it is suitable for measuring at least the flow rate and/or flow of the fluid which passes through the device.

Conveniently, the device 1 is a water meter and, in particular, it is also called "water meter ".

Advantageously, the device 1 according to the invention is suitable for being used and installed in networks for distributing a fluid to a user.

Preferably, the device 1 according to the invention can be advantageously installed and used in distribution networks for a liquid, in particular water.

Advantageously, the device 1 according to the invention is illustrated in the attached figures in a non-limiting example in which it is configured to be crossed by a flow of a liquid, such as for example water. In the following reference will be made in particular to the use of the device for measuring a liquid, however it is understood that in a corresponding way or in any case with modifications easily within the reach of the technician in the sector, it could be used for measuring a gas or a fluid multiphase.

Conveniently, the device 1 can be associated with a liquid inlet, for example defined by a duct section upstream of the device, and with a liquid outlet, for example defined by a duct section downstream of said device.

The device 1 for measuring a liquid, according to the invention, comprises at least one containment structure 2, internally defining a housing volume 3.

The containment structure 2 comprises a bottom wall 4, which is equipped with a first surface facing internally with respect to said housing volume 3 and a second surface facing externally with respect to said housing volume 3.

Preferably, the containment structure 2 comprises at least one side wall 2', which extends perimetrically from the bottom wall 4 and laterally delimits the housing volume 3.

Conveniently, the containment structure 2 is made of polymeric material, preferably of plastic. Preferably, the bottom wall 4 and the side wall 3 are made in a single body, for example in plastic material by moulding.

Advantageously, the containment structure 2 comprises at least one lid 2" which can be mechanically associated/associated with the free edges of the side wall 2, substantially opposite the bottom wall 4 and configured to delimit the housing volume 3 at the top. Preferably, the lid 2" is made, at least in part, of a transparent material.

The device 1 according to the invention further comprises a unit 5 for the passage of the fluid, in particular the liquid. In particular, the unit 5 comprises a duct 50 which internally delimits a path 5' extending along a direction X to thus be crossed by a flow of fluid with a direction that goes mainly from the first port 6 towards the second port 7. Suitably, the the fluid flow which passes through the duct 50 could also have an opposite direction, ie be directed from the second port 7 towards the first port 6. Preferably, the first port 6 and the second port 7 are aligned and facing each other.

Conveniently, the fluid passage unit 5 comprises at least one abutment portion 8 which can be mechanically connected to said bottom wall 4 of said containment structure 2 at said second surface. Said at least one abutment portion 8 is in direct contact (i.e. without the interposition of further intermediate components) with the bottom wall 4 of the containment structure 2.

Conveniently, the fluid passage unit 5 can be made of metal or its alloys, or it can be made of plastic or in any case of polymeric material.

Preferably, the abutment portion 8 and the duct 50 of the unit 5 are made in a single piece and, in particular, are made of metal or its alloys, for example brass.

Preferably, the abutment portion 8 comprises a tubular section which extends radially from a surface of the duct 50.

Preferably, the abutment portion 8 of the unit 5 is made by thickening the external wall with respect to the path 5' and is interposed between the first port 6 and the second port 7 along the longitudinal development of the duct 50. Advantageously, the abutment portion 8 can comprise a substantially flat abutment surface 8' suitable for receiving in abutment the second surface of the bottom wall 4 of the containment structure 2.

Preferably, in correspondence with the first port 6 and/or the second port 7, mechanical connection means can be provided, for example flanged portions, in particular threaded, with upstream and downstream ducts (not shown in the attached figures and in themselves well known sector technician) that are external to device 1.

The containment structure 2 is watertight to prevent the outward leakage of liquid and/or the ingress of liquid from the outside into the interior of the housing volume 3. Preferably, the containment structure 2 is formed by two or more parts joined together in order to ensure the tightness of the entire structure.

The present patent text has been drawn up with the convention that the liquid passes through the device 1 from the first port 6 to the second port 7 in a non-limiting way of example, for the purpose of describing the preferential embodiment. Obviously, the device 1 can be installed in the duct in such a way that the first port 6 is configured for the liquid outlet and the second port 7 is configured for the liquid inlet, without thereby departing from the protection scope of the present privative.

Said at least one clamping element 10 is housed inside said housing volume 3 of said containment structure 2. In particular, the clamping element 10 is housed inside said housing volume so as to not be accessible from outside said containment structure.

Preferably, said at least one clamping element 10 is entirely housed and arranged inside the housing volume 3 of the containment structure 2.

Preferably, said at least one clamping element 10 is inserted inside the containment structure 2 not laterally, but crossing the port which is delimited by the free edges of the side wall 2' and which is intended to be closed by the lid 2".

Preferably, said at least one clamping element 10 does not cross the bottom wall 4 in a direction perpendicular to the thickness of the wall itself. Preferably, the bottom wall 4 has no through holes which extend in a direction perpendicular to the thickness of the wall itself.

Preferably, said at least one clamping element 10 rests on the inner surface of the bottom wall and/or crosses the bottom wall 4 in a direction substantially corresponding to the thickness of the wall itself.

Preferably, said at least one clamping element 10 and said abutment portion 8 of said unit 5.

Preferably, the clamping element 10 is made of rigid material, such as for example plastic or metal, for example stainless steel or the like. Conveniently, the clamping element 10 is made of a more rigid material than the bottom wall 4 of the containment structure 2.

Clearly, said at least one clamping element can be made of any material suitable for performing the gripping function described herein, without thereby departing from the scope of protection of the present patent.

Preferably, said at least one clamping element 10 is placed close to the bottom wall 4 of the containment structure 2, on the side of the first surface of said bottom wall.

Preferably, said at least one clamping element 10 is in direct contact, at least in part, with said first surface of said bottom wall 4 of said containment structure 2, while said at least one abutment portion 8 is in direct contact, at least in part, with said second surface of the bottom 4 of the containment structure 2.

Conveniently, the clamping element 10 is a separate piece with respect to the bottom wall 4, and in particular it is not co-moulded with the latter. Conveniently, the clamping element 10 does not consist of screws, bolts or similar members. In particular, the clamping element 10 and the connection means 9 are mechanically/structurally distinct.

Conveniently, the device 1 can also comprise connection means 9 configured to connect together said clamping element 10, said bottom wall 4 and the unit 5, preferably in correspondence with said abutment portion 8 intended to come into contact with the bottom wall 4. Preferably, the connection means 9 comprise at least one mechanical constraint member 18 configured to pass through a corresponding through hole formed in the clamping element 10 and in the bottom wall 4 to engage within a hole 29 formed in the unit 5, preferably obtained in the abutment portion of the unit 5. In the embodiments in which the connection means 9 are provided, said means are mechanically separated and distinct from the clamping element 10.

Preferably, the connection means 9 are configured to mechanically fix at least said bottom wall 4 between said clamping element 10 and said abutment portion 8 of the unit 5. In this way, the device 1 allows it to be assembled quickly and simple, since it is sufficient to operate the connection means 9 to mechanically fix the bottom wall 4 between the clamping element 10 and the abutment portion 8 of the unit 5.

For this purpose, advantageously, the connection means 9 are accessible from inside the housing volume 3 of the containment structure 2. Preferably, the connection means 9 - which connect the clamping element 10 to the abutment portion 8 by crossing the bottom wall 4 - are all housed entirely and arranged inside the housing volume 3 of the containment structure 2. Advantageously, this reduces/avoids the possibility of tampering with the device and in any case avoids having to add dedicated anti-burglary seals.

The device 1 comprises sensor means 11 configured to measure at least one flow rate and/or flow of the fluid which passes through the duct 50 of said unit 5. Conveniently, the sensor means 11 can be mounted on said at least one unit 5 for the passage of said fluid and/or on the containment structure 2, in correspondence with its bottom wall 4.

The sensor means 11 are entirely or in any case mostly housed inside said unit 5 for the passage of said fluid.

Advantageously, the sensor means 11 are equipped with electrical connection means 14 placed across the bottom wall 4 of the containment structure 2 and of the clamping element 10.

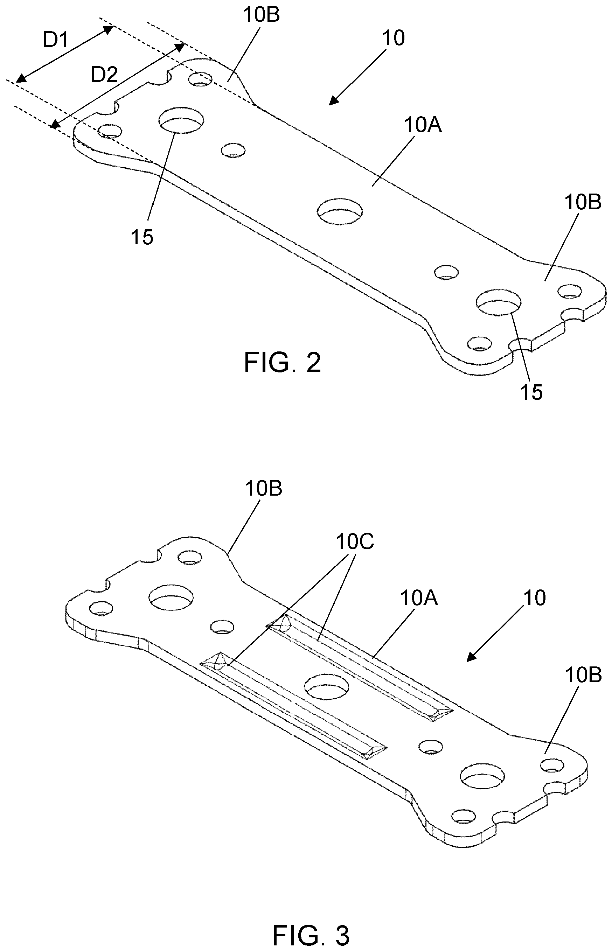

Preferably, in some possible embodiments (see for example figures 2, 3 and 4A), the sensor means 11 are never in direct contact with the clamping element 10, but are always and only in contact with the bottom wall 4 of the containment structure 2.

Preferably, said at least one clamping element 10 has a substantially laminar development with a thickness which remains substantially constant throughout the surface development of the element itself.

Preferably, in some possible embodiments (see for example figures 2, 3 and 4A), the clamping element 10 rests/abuts on the first surface of the bottom wall 4 (ie on the surface facing the inside of the housing volume 3) without protruding inside the first through openings 13 obtained on the same bottom wall 4.

Suitably, the sensor means 11 are housed inside at least one corresponding seat 12, made in said abutment portion 8 of the unit 5, and are blocked by said bottom wall 4 of said containment structure 2. Suitably, the seats 12 are open and communicating with the duct 50 of the unit 5.

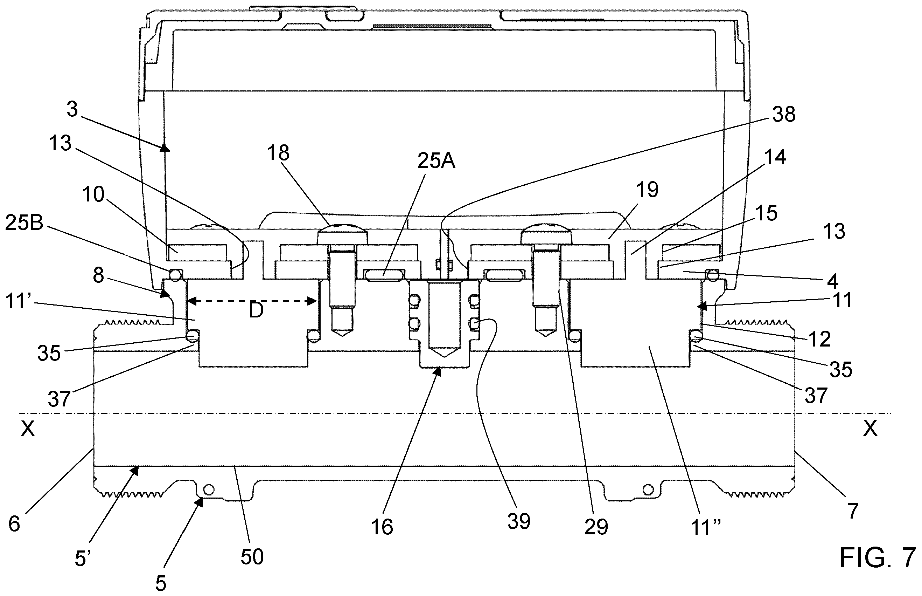

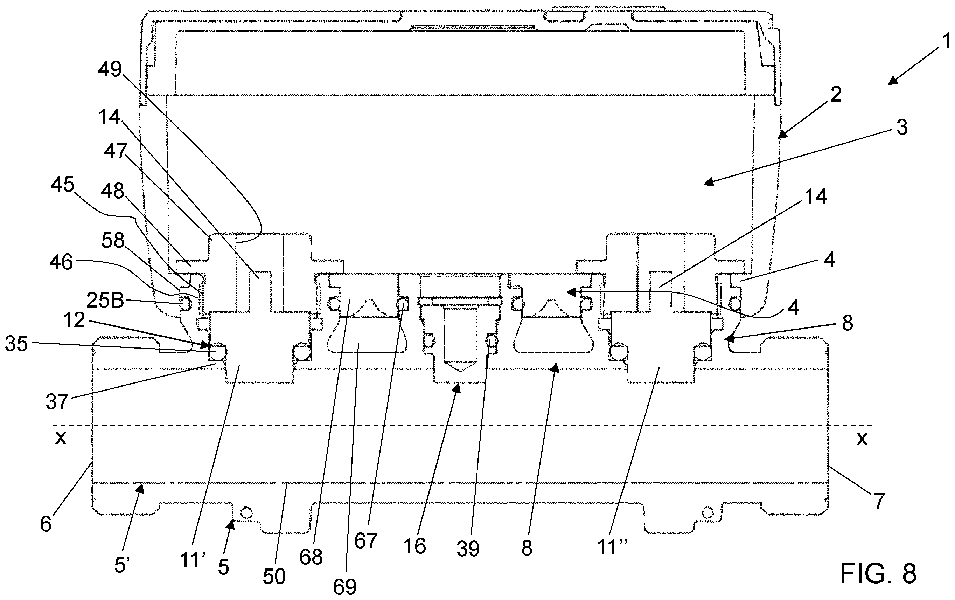

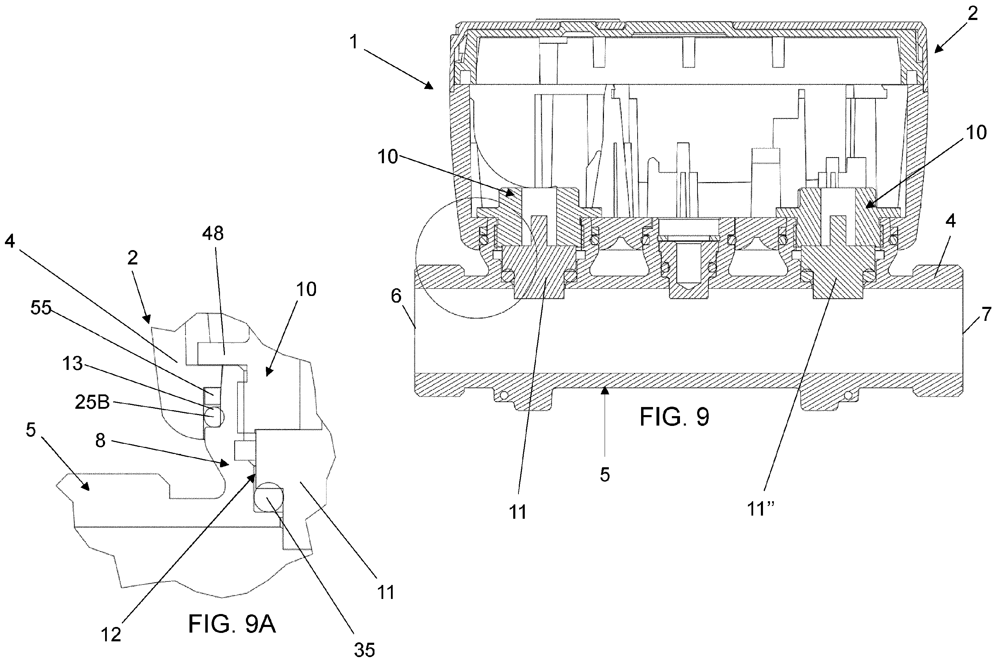

The sensor means 11 are housed entirely or in any case for the most part in said unit 5 inside at least one corresponding seat 12, obtained in said abutment portion 8 of the unit 5, and are blocked in the corresponding seat 12 by said bottom wall 4 of said containment structure 2 (see fig. 7) and/or by said at least one clamping element 10 (see figs. 8 and 9).

Preferably, the sensor means 11 comprise flow sensors, configured to detect a measurement of the flow rate of the liquid flowing inside the duct 50 of the unit 5. Conveniently, the sensor means comprise at least a pair of ultrasonic sensors, respectively 11' and 11", arranged one upstream and one downstream with respect to the direction of advancement of the flow of liquid inside the duct 50. Preferably, the ultrasonic sensors 11' and 11" are of a type which is substantially known per se in the sector of fluid meters, for example water meters.

Advantageously, in accordance with the preferred embodiment illustrated in the accompanying figures, the sensor means 11 comprise at least a first ultrasonic sensor 11', configured to emit at least one ultrasound signal inside the duct 50 to thus intercept the flow of said liquid, and at least one second ultrasonic sensor 11" configured to receive said ultrasonic signal. Preferably, with reference to the particular but non-limiting embodiment illustrated in the attached figures, the second sensor 11" is arranged alongside (and downstream) said first sensor 11' but could be arranged in a radially opposite area (and downstream) with respect to said first sensor 11'. In more detail, the flow rate or flow of the liquid inside the duct is obtained, in a manner known per se to those skilled in the art and therefore not described in detail below, on the basis of the propagation time, i.e. the time interval between the time instant in which the ultrasound signal is emitted by the first sensor 11' and the time instant in which the ultrasound signal is received by the second sensor 11", and/or vice versa.

Preferably, the first sensor 11' and the second sensor 11" are configured to be operatively associated with the path 5'. In more detail, the seats 12 pass inside the abutment portion 8 and are occupied substantially to measure respectively by the first sensor 11' and by the second sensor 11".

Advantageously, the device 1 can comprise an insert (not shown in the attached figures) equipped with at least one reflecting element, opposite with respect to the sensor means 11 and with respect to the abutment portion 8, configured to receive the ultrasonic signal emitted by the first sensor 11' and reflect it towards the second sensor 11" (and/or vice versa), thus allowing the ultrasonic signal to transversely intercept the flow of fluid flowing inside the duct 50 of the unit 5.

Preferably, the insert can comprise several reflector elements offset from each other to increase the number of reflections that the ultrasonic signal performs before being received by the receiver 11", thus defining a "U"-shaped reflection path (in accordance with the embodiment illustrated in the attached figures), or for example "V" or "W' shaped. Preferably, in a version not shown here, no reflector element could be provided and the sensors 11' and 11" are arranged so that the ultrasonic signal emitted by the first sensor 11' is received directly by the second sensor 11", and /or viceversa.

Advantageously, said containment structure 2 is equipped with at least one first through opening 13 made in correspondence with said sensor means 11 and crossed by electrical connection means 14, electrically connected to said sensor means 11.

Conveniently, the passage section - and in particular the diameter - of said at least one first through opening 13 is smaller, preferably much smaller, than the dimension D (with respect to the diameter) of the transversal section of the sensor means 11; advantageously, in some possible embodiments (see for example figures 2, 3 and 4A), this avoids any direct contact between the clamping element 10, made of rigid material, and the sensor means 11, thus avoiding any damage of the latter while at the same time defining a rigid abutment suitable for allowing precise and repeatable positioning of the sensor means 11.

Conveniently, the clamping element 10 is provided with at least one second through opening 15 facing said first through opening 13 and crossed by said electrical connection means 14, to thus allow connection with at least one electronic control unit (not shown in the attached figures) housed inside said housing volume 3 of said containment structure 2.

Preferably, the electronic control unit comprises an electronic card equipped with a microprocessor or microcontroller. Conveniently, the sensor means 11 can be of the electronic type and be provided with its own electronic board or be associated with a common electronic board (for example defined by the processing unit) associated with the structure 2, in particular housed inside the housing volume 3.

The device 1 preferably also comprises at least one memory unit. Conveniently, this at least memory unit is defined by an electronic board which houses a memory, preferably a non-volatile one, for example a ROM or EPROM or EEPROM or flash memory, or even a volatile one, for example RAM. Advantageously, said at least memory unit can be housed inside the structure 2, but could also be housed outside the structure 2.

Advantageously furthermore, the device comprises electric power supply means (not shown in the accompanying figures) electrically connected to the electronic control unit and configured to supply the latter electrically.

For example, the electric power supply means comprise at least one electric battery, housed inside the housing volume 3 and electrically connected to the electronic control unit to supply it.

Preferably, the device 1 comprises at least one further element 16 housed in a second seat 17 obtained in said abutment portion 8 of the unit 5. Conveniently, the second seat 17 passes through and communicates with the duct 50 of the unit 5. Preferably, said further sensor 16 is interposed (along a direction substantially parallel to the direction X) between the first ultrasonic sensor 11' and the second ultrasonic sensor 11".

The further element 16 advantageously comprises a further sensor configured to detect and/or measure a characteristic or size of the fluid flowing in the duct 50 of said unit 5. In more detail, for example, said further sensor comprises a temperature sensor, and /or a pressure sensor, and/or a sensor of the quality of the liquid (for example of water) flowing inside the duct 50 of the unit 5, and/or a liquid density sensor.

Advantageously, the further element 16 comprises a containment body 20 (preferably made in a single piece), housed to measure inside the second seat 17 and equipped with an internal compartment in which the aforementioned further sensor is housed, for example an element sensitivity of a transducer for detecting the desired quantity of the liquid. In particular, the containment body 20 internally comprises a hole, preferably blind, equipped with an access port 21 accessible from the housing volume 3 through a further through opening 38 aligned with it obtained on the bottom wall 4 of the containment structure 2.

This hole, preferably blind, of the containment body 20 defines the compartment in which the further sensor is housed, in particular the transducer for converting the desired physical quantity, be it the temperature, pressure or density of the fluid or the like, into another signal or in an electrical signal.

Conveniently, the connection means 9 comprise at least one mechanical constraint member, for example a screw 18 equipped with a shank, placed across said clamping element 10 and said bottom wall 4 and engaged, preferably by screwing, in holes 29 (blind or through) obtained in said abutment portion 8 of said unit 5. Preferably, the holes 29 are obtained around the seats 12 and/or in the area of the abutment portion 8 defined between each seat 12 and the second seat 17.

Preferably, in accordance with the preferred embodiment illustrated in the attached figures, the connection means 9 comprise a plurality of screws 18, each placed across the clamping element 10, of the bottom wall 4 and screwed together with the abutment portion 8 of the unit 5.

Preferably, the screws 18 of the connection means 9 are arranged across respective through holes, which are provided around the through openings 13, 15 for the electrical connection means 14 of the sensor means 11.

Preferably, the further element 16, and in particular the containment body 20, comprises an enlarged head 16' intended to be housed to measure within the second seat 17, preferably substantially flush with the abutment surface 8' of the abutment portion 8 of the unit 5. Conveniently, in a particular embodiment, the enlarged head 16' can be threaded to engage in screwing in the second seat 17.

Conveniently furthermore, the further element 16, and in particular the containment body 20, comprises a stem 16" provided with a smaller transversal extension than the enlarged head 16' and which develops starting from the latter to thus fit into the interior of the second seat 17.

In other words, the containment body 20 comprises a stem 16" which is narrower than the enlarged head 16' and is firmly connected to the latter. The stem 16" is configured to be housed first inside the second seat 17.

Advantageously, at least one annular shoulder 16"' is provided on the stem 16", and preferably at least two annular shoulders 16"' between which at least one gasket is interposed and preferably at least two gaskets, in particular two O-rings, suitable to ensure the seal against the liquid circulating in the duct 50.

Advantageously, in accordance with the preferential embodiments illustrated in the attached figures, said clamping element 10 comprises at least one shaped plate placed in abutment/contact against said first surface of said bottom wall 4 of said containment structure 2.

Conveniently, in some possible embodiments (see for example figures 2, 3 and 4A), the first surface of said bottom wall 4 only contacts the clamping element 10 while the second surface of said bottom wall 4 is in contact (in abutment) only with the sensor means 11, thus there being no direct contact between the clamping element 10 and the sensor means 11.

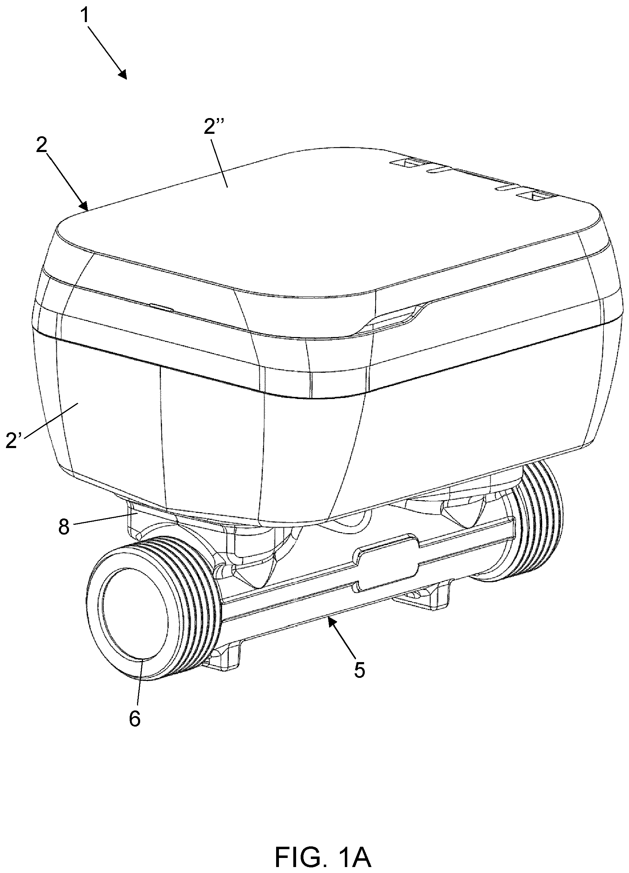

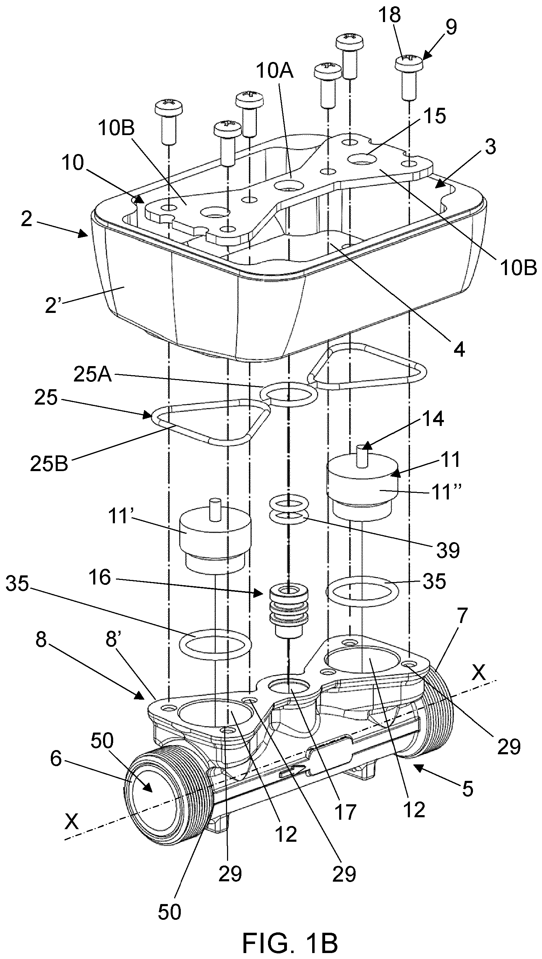

Advantageously, in accordance with the first embodiment of the clamping element 10 illustrated in the attached figure 1B, the shaped plate comprises a substantially quadrangular central portion 10A, and two end portions 10B. Preferably, the central portion 10A and the end portions 10B are made in a single body.

Preferably, the end portions 10B are arranged respectively in correspondence with the first sensor 11' and the second sensor 11" of the sensor means 11.

In the same way, advantageously, the central portion 10A is placed in correspondence with the further element 16. In more detail, advantageously, the central portion 10A advantageously acts as a mechanical stop for the further element 16, which is kept in position at the inside the second seat 17 by the action of the connection means 9 which constrain the clamping element 10 to the abutment portion 8 of the unit 5 so that these clamp the bottom wall 4 of the containment structure 2 to each other.

Advantageously, in order to limit the use of material for making the clamping element 10, with respect to its plane of arrangement, the central portion 10A has a smaller size than the end portions 10B.

Advantageously, the end portions 10B develop from the central portion 10A with a flared connecting section, which defines the increase in size with respect to the aforementioned plane of arrangement of the clamping element 10.

In more detail, in accordance with the first embodiment illustrated in the attached figure 1B, the central portion 10A has a transverse size D1 (in particular indicated in the attached figure 2) equal to approximately 0.5 of the transverse size D2 of the end portions 10B.

Otherwise, in accordance with the second embodiment of the clamping element 10 illustrated in the attached figure 2 and in accordance with the third embodiment of the clamping element 10 illustrated in the attached figure 3, the transverse dimension D1 of the central portion 10A is equal to approximately 0.5 - 1.0 of the transversal size D2 of the end portions 10B.

In this way, the clamping element 10 is provided with greater mechanical stiffness in correspondence with the further sensor 16 located centrally with respect to the first sensor 11' and the second sensor 11" of the sensor means 11.

Advantageously, in order to further increase the mechanical stiffness of the central portion 10A, the clamping element 10 can comprise ribs 10C projecting onto the central portion 10A itself. The ribs 10C are preferably made in one piece with the central portion 10A.

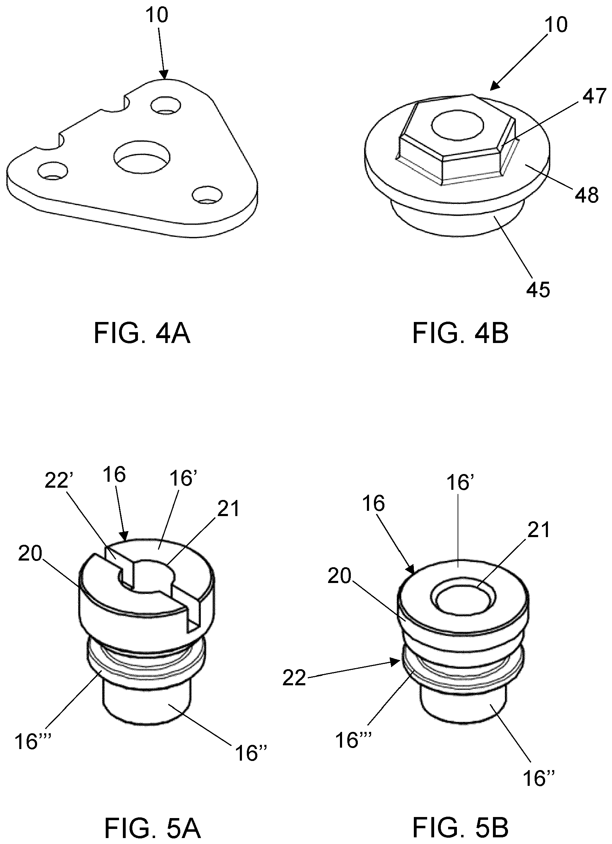

Advantageously, in accordance with the fourth embodiment of the clamping element 10 illustrated in the attached figure 4A and in accordance with the fifth embodiment illustrated in the attached figures 4B and 8, the device 1 can comprise two clamping elements 10, side by side, each placed in abutment against said first surface of said bottom wall 4 of said containment structure 2 in correspondence with the sensor means 11, in particular in correspondence respectively with the first sensor 11' and the second sensor 11" of said sensor means 11.

In accordance with the fourth embodiment of the clamping element 10 illustrated in the attached figure 4A, each clamping element 10 comprises a plate having a substantially triangular shape.

Conveniently, in accordance with a possible embodiment (cf. figs. 4B and 8), the same clamping element 10 also acts as a connection means 9 with the abutment portion 8 of the unit 5. In particular, in this case, the clamping element 10 engages directly with the abutment portion 8 of the unit 5, and is preferably configured to be screwed inside a corresponding seat 12, formed in said abutment portion 8, for housing said sensor means 11.

Preferably, the same clamping element 10 is configured to be screwed directly to the abutment portion 8 of the unit 5, thus speeding up the assembly, even though the bottom wall 4 of the containment structure 2 is clamped between said clamping element 10 and the beat portion of unit 5.

In particular, in accordance with the fifth embodiment of the clamping element 10 illustrated in the attached figures 4B and 8, each clamping element 10 comprises a flanged section 48, preferably substantially discoidal in shape. Preferably, in accordance with this fifth embodiment, each clamping element 10 is made in a single body with the connection means 9, and is configured to be mechanically constrained by screwing into a corresponding seat 12 for the sensor means 11 obtained in the abutment portion 8 of the unit 5. In more detail, in a preferred embodiment, the flanged section 48 of each clamping element 10 - such as for example the one in fig. 4B and 8 - a head 47 protrudes (for example hexagonal) to allow screwing from the inside of the housing volume 3 of the containment structure 2 while an externally threaded section 45 projects below for engagement of the screw-nut type with a internally threaded portion 46 of the wall of a corresponding seat 12. Conveniently, the body of each clamping element 10 is provided with an internal passage 49 for the electrical connection means 14 of the sensor means 11.

Conveniently, in the embodiment of fig. 4B and 8, the clamping element 10 comes into direct contact with the sensor means 11. Advantageously, screwing the clamping element 10 inside the seat 12 also causes the compression of a sealing member 35 against a abutment step 37 obtained inside each seat 12, thus guaranteeing the seal with respect to the fluid circulating inside the duct 50 and which laps the surface of the sensor means 11. Advantageously, the clamping element 10 is screwed until its flanged section 48 abuts with the first surface of the bottom wall 4 of the containment structure 2 and/or with the inlet edge of each seat 12

Preferably, said at least one clamping element 10 can be made of the same material (for example metal, preferably brass) as the abutment portion 8 of the unit 5, or it can be made of a different material.

Conveniently, the bottom wall 4 can have a substantially flat development or, in accordance with a possible embodiment represented for example in fig. 8, the bottom wall 4 of the containment structure 2 can comprise sections 68 protruding towards the outside of the housing volume 3 and intended to be inserted and housed, preferably with further gaskets 67, inside corresponding hollow seats 69 formed in the abutment portion 8 of unit 5.

Conveniently, in accordance with the fourth embodiment of the clamping element 10 illustrated in the attached figure 4A and in accordance with the fifth embodiment illustrated in the attached figure 4B, the clamping element 10 is not provided with any central portion 10A.

Therefore, in order to allow the further sensor 16 to remain mechanically constrained inside its seat 17 of the abutment portion 8 of the unit 5, in accordance with the second and third embodiments illustrated in the attached figures 5A and 5B, the the further sensor 16 may comprise locking means 22. For example, such locking means may comprise a thread (not shown) made on the stem and/or a locking elastic ring (also known in jargon as "Seeger") configured to engage with a groove formed in the seat 17, thus defining an undercut engagement.

In particular, in accordance with the second embodiment of the further element 16 illustrated in the attached figure 5A, the head 16' is provided with at least one transversal cut 22' configured to be engaged by the head of a screwdriver to allow it to be screwed into the seat 17.

In this way, the further sensor 16 does not require the mechanical abutment of the central portion 10A of the clamping element 10 according to its first three embodiments, thus being usable also in the case of the fourth and fifth embodiments of the clamping element 10 same.

Advantageously, in order to improve the hydraulic seal of the device 1 according to the invention, said clamping element 10 can be embedded in a polymeric material 19 configured to prevent the entry into said housing volume 3 of liquids or other particles from the outside.

Preferably, the polymeric material 19 comprises for example polyurethane and/or similar polymers.

Operatively, the polymeric material is introduced inside the housing volume 3 of the containment structure 2 in molten form, until preferably completely drowning the clamping element 10 and/or the screws 18 of the connection means 9.

Advantageously, the polymeric material 19 - once solidified - defines a gasket layer, i.e. a hydraulic separation layer to prevent the fluid flowing in the duct 50 from entering the housing volume 3, and in particular from reaching the area where it is housed/positioned the electronics.

Advantageously, the containment structure 2, and in particular the bottom wall 4, can be shaped so as to define a further housing seat 23 for the clamping element 10. In more detail, the bottom wall 4 comprises at least one side 24, and preferably two sides 24, which protrude from the first surface and define between them the aforementioned further housing seat 23 for the clamping element 10.

Advantageously, the seat 23 is shaped to substantially fit the shaped plate of the clamping element 10.

Conveniently, the polymeric material is poured in molten form into the further housing seat 23 of the containment structure 2, until it reaches the upper free edges of the sides 24, drowning the clamping element 10.

In other words the polimeric material 19 is present inside the housing seat 23 and surrounds at least said clamping element 10 and/or the screws 18 of the connection means 9.

In this way, the device 1 makes it possible to limit the use of polymeric material 19 (thereby limiting production costs), requiring only the filling of the housing seat 23 and not the entire bottom wall 4.

Advantageously, the device 1 also comprises corresponding sealing members 35, for example O-rings, which are inserted inside the housing seat 12 of each sensor means 11. Conveniently, the gripping of the bottom wall 4 between the clamping element 10 and the sensors 11 also causes the compression of each sealing member 35 against an abutment step 37 obtained inside each seat 12, thus ensuring the seal with respect to the fluid circulating inside the duct 50 and which laps the surface of the sensor means 11.

Advantageously, the device 1 also comprises further sealing elements 39, for example O-rings, which are fitted around the containment body 20 of the further element 16 and which are suitably compressed by the bottom wall 4 (in particular due to the clamping of said bottom wall 4 between said clamping element 10, the abutment portion 8 of said unit 5) within the second seat 17 formed in said abutment portion 8 of unit 5, to thus guarantee sealing with respect to the circulating fluid inside the tube also in correspondence with the second seat 17.

Advantageously, the device 1 comprises insulation means 25 interposed between the second surface of the bottom wall 4 of the containment structure 2 and the abutment portion 8 of the unit 5 configured to insulate the inside of the containment structure 2 from the external environment.

Preferably, in a possible embodiment (not shown), the insulation means 25 can comprise a sealing product interposed between the second surface of the bottom wall 4 of the containment structure 2 and the abutment portion 8 of the unit 5 so to isolate the inside of the containment structure 2 from the external environment.

Preferably, in a possible embodiment such as the one shown in the drawings, the insulation means 25 comprises gasket means 25A and 25B. In more detail, the insulation means 25 comprise a central circular gasket 25A interposed (and compressed) between the outer surface of the abutment portion 8 which surrounds the second seat 17 and a corresponding receiving area defined in/by the second surface of the bottom wall 4 which surrounds the further through opening 38.

Conveniently, the insulation means 25 comprise at least two side gaskets 25B, for example substantially triangular in shape, configured to be interposed between the outer surface of the abutment portion 8 which surrounds the corresponding first seats 12 and a reception area defined in/by second surface of the bottom wall 4 which surrounds a corresponding through opening 13 of the bottom wall 4. Preferably, the side gaskets 25B are configured to also wrap around the holes 29 for the screws 18 of the connection means 9.

Preferably, in a possible embodiment (see fig. 8), the side gaskets 25B are mounted/fitted around the outer surface of the abutment portion 8 which surrounds the corresponding first seats 12. Advantageously, therefore, the side gaskets 25B can be stably mounted on the first seats 12 before joining the unit 5 to the bottom wall 4 containment structure 2, thus simplifying and facilitating the assembly and assembly of the device. Furthermore, the lateral gaskets 25B are preferably compressed between two pieces/parts which are not subjected to any screwing and, in particular, they are compressed between the outer surface of the abutment portion 8 which surrounds the corresponding first seats 12 and the lateral portions 58 of the bottom wall 4 which surround a corresponding through opening 13 of the bottom wall 4; advantageously, this makes the fluidic isolation thus obtained safer.

Conveniently, in the embodiment of fig. 8 in which the clamping elements 10 are screwed directly into the same housing seats 12 of the sensor means 11, the insulation means 25 can comprise two lateral gaskets 25B, for example of the O-ring type, configured to be interposed between the surface external part of the abutment portion 8 which surrounds the corresponding first seats 12 and the lateral portions 58 of the bottom wall 4 which surround a corresponding through opening 13 of the bottom wall 4. In particular, advantageously, this allows to have a particularly reliable seal, also using traditional O-ring type 25B seals, as well as facilitates and speeds up the assembly of the device.

The sensor means 11 are structurally/mechanically distinct from said at least one clamping element 10. In particular, the sensor means 11 comprise sensor bodies which are structurally/mechanically distinct and separate from the clamping elements 10. Suitably, the sensor means 11 do not function and are not configured to act as clamping elements 10. Basically, there is a mechanical and structural separation between the clamping elements 10 and the sensor means 11 which measure the flow rate and/or flow of the fluid passing through the duct 50 of said unit 5. Advantageously, this allows a considerable constructive simplification since it is possible to use sensor means 11 of a commercial type, as well as allowing their easy replacement without the need to also modify the clamping elements 10. Moreover, conveniently, the sensor means 11 are inserted and rested inside the seat 12 without any screwing and this allows and advantageously to avoid the risk of damaging the sensor means 11 themselves; furthermore, the fact that the sensor means 11 are inserted and rested inside the seat 12 without being screwed inside the seat itself allows greater precision and repeatability of their positioning, and therefore greater precision and repeatability of the measurements carried out by means of said sensor means 11.

Preferably, in a possible embodiment (see fig. 8), the sensor means 11 are in direct contact with the clamping element 10.

Preferably, said at least one clamping element 10 is defined by a piece (or even several pieces) which is distinct from the sensor bodies of the sensor means 11 and is configured to engage - preferably by screwing - into corresponding seats 12 obtained in the abutment portion 8 of the unit 5 after the sensor means 11 have been positioned and inserted inside the same seats 12. Advantageously, in this case, the clamping elements 10 block the sensor means 11 in the respective seats 12 formed in the abutment portion 8 of unit 5.

Preferably, in a possible embodiment (see fig. 8), the clamping elements 10 come into direct mechanical contact (only or mainly) with the abutment portion 8 of the unit 5, without the interposition of any gasket; advantageously this allows a more secure connection.

In accordance with the preferred embodiment illustrated in the accompanying figures, the central gasket 25A is mechanically connected to the at least two lateral gaskets 25B, defining a single body.

Otherwise, in accordance with a further embodiment not shown, the central gasket 25A can be mechanically untied and/or separated from the lateral gaskets 25B.

Preferably, in accordance with the possible variant of fig. 9 and 9A, each side gasket 25B can be held/locked in position by a washer element 55 or its equivalent (which can be made of plastic or metal) which in turn is locked between the outer surface of the abutment portion 8 which surrounds the corresponding first seats 12 and a reception zone defined in/by the second surface of the bottom wall 4 which surrounds a corresponding through opening 13 of the bottom wall 4. Advantageously, this allows to further improve the manufacturability of the unit 5 for the passage of the fluid (both in the case in which said unit is made of brass and in the case in which it is made of plastic). Conveniently, the washer element 55 (or its equivalent) can be locked in various ways between the outer surface of the abutment portion 8 and the receiving area defined in/by the second surface of the bottom wall 4, for example by forced keying, grub screw, punching or various types of welding.

Preferably, the device 1 comprises a further electric unit defining a processing and/or communication module and which can be positioned inside or outside the containment structure 2.

Appropriately, the processing and/or communication module comprises its own processing and/or control unit which, preferably, is defined by an electronic card (for example a printed circuit PCB) in which a microprocessor or microcontroller is housed. In particular, the processing and/or communication module it is configured to receive the detections carried out by the sensor means 11 and, in particular, to receive electrical signals (preferably digital) representative of the quantities detected by the sensor means 11.

Advantageously, the device 1 can also comprise a user interface - for example a button panel associated with a display or a monitor, for example of the touch-screen type - configured to allow the user to interact with the external module. Conveniently, the data received and/or processed by said processing and/or communication module are shown on the display.

Advantageously, the further electronic unit of the processing and/or communication module is electrically connected to the electronic control unit.

From what has been said it is clear that the device 1 according to the invention is more advantageous than traditional devices because it:
- can be mounted and assembled quickly and easily, in particular by obviating the need to rotate the components;
- can be manufactured and industrially assembled in a simple, rapid and low-cost way;
- allows a fixed and repeatable positioning of the sensors inside the respective seats, thus guaranteeing a high precision of the measurement performed by the sensors,
- is simpler and cheaper to make,
- does not necessarily require the presence of a layer of insulating material;
- has improved tamper resistance;
- is structurally and functionally completely reliable;
- is an improvement and/or alternative to the traditional ones;
- features high standards of safety and operability.

In particular, unlike EP2594907 in which the clamping element protrudes with its ends from the containment structure, in the solution according to the invention the clamping element is housed inside the containment structure so as not to be accessible from outside the containment structure; unlike EP3502632 in which the sensor means and the clamping elements are defined by a single component, in the solution according to the invention the sensor means are structurally distinct from the clamping element ; unlike EP3037790 in which the sensor means are mounted externally with respect to the fluid passage duct, in the solution according to the invention the sensor means are mounted entirely in corresponding seats formed in said at least one abutment portion of the unit for the passage of said fluid; unlike CN206573171 in which the duct for the passage of the fluid passes through the inside of the containment structure, in the solution according to the invention the abutment portion of the fluid passage unit can be connected mechanically and comes into contact with the second surface of the bottom wall of the structure, i.e. with the surface facing externally with respect to the housing volume; unlike CN108151812 in which the clamping plate is positioned outside the containment structure, in the solution according to the invention the clamping element is housed inside said housing volume of the containment structure so as not to be accessible from the outside of said containment structure. Unlike the known solutions, the solution according to the invention is particularly advantageous as it allows - thanks to the blocking by the bottom of the containment structure or of the clamping element - a fixed and repeatable positioning of the sensors inside the respective seats, thus guaranteeing a high precision of the measurement carried out by the sensors, and this is also obtained by avoiding having to rotate and screw the sensors themselves (and therefore avoiding the risk of damaging said sensors) and also allowing to obtain an improved resistance to tampering given that the clamping element is not accessible from outside the containment structure.

The present invention has been illustrated and described in a preferred embodiment thereof, but it is understood that executive variants can be applied to it in practice, without however departing from the scope of protection of the present patent for industrial invention, which is defined by the appended claims.

## Claims

1. Device (1) for measuring a fluid, preferably a liquid, in particular of the type suitable for measuring the flow rate and/or flow of a fluid circulating inside a duct and through the device itself, wherein said device (1) comprises:
- at least one containment structure (2), internally defining a housing volume (3) and comprising a bottom wall (4), which is provided with a first surface facing internally with respect to said housing volume (3) and a second surface facing externally with respect to said housing volume (3), the containment structure (2) being leakproof to prevent the outward leakage of liquid and/or the ingress of liquid from the outside into the interior of the housing volume (3);
- at least one unit (5) for the passage of said fluid, comprising:
- a duct (50) internally delimiting a path (5') extending along a flow direction (X) between an inlet port (6) for said fluid and an outlet opening (7) for said fluid, and
- at least one abutment portion (8) which can be mechanically connected to said bottom wall (4) of said containment structure (2) at said second surface;
- at least one clamping element (10) which is housed inside said housing volume (3) of said containment structure (2) so as not to be accessible from the outside of said containment structure (2);
- sensor means (11) which are structurally distinct from said at least one clamping element (10) and which are configured to measure at least one flow rate and/or flow of the fluid passing through the duct (50) of said unit (5),
and wherein:
- said bottom wall (4) is clamped between said at least one clamping element (10) and said abutment portion (8) of said unit (5),
- said at least one abutment portion (8) is in direct contact with the bottom wall (4) of the containment structure (2),
- said sensor means (11) are mounted, entirely or for the most part, in corresponding seats (12) obtained in said at least one abutment portion (8) of the unit (5) for the passage of said fluid and being blocked inside the corresponding seats (12) by said bottom wall (4) of said containment structure (2) and/or by said at least one clamping element (10).

2. Device according to claim 1, **characterized in that** said at least one clamping element (10) contacts only the first surface of the bottom wall (4), while the sensor means (11) contacts only the second surface of the bottom wall (4), thus there being no direct contact between said at least one clamping element (10) and the sensor means (11).

3. Device according to claims 1 or 2, **characterized in that** said at least one clamping element (10) comprises at least one shaped plate placed in abutment/contact against said first surface of said bottom wall (4) of said containment structure (2).

4. Device according to claim 1, **characterized in that** said at least one clamping element (10) engages directly with the abutment portion (8) of the unit (5) and, preferably, is configured to be engaged for screwing inside a corresponding seat (12), formed in said abutment portion (8), for housing said sensor means (11).

5. Device according to one or more of the preceding claims 1 - 3, **characterized in that** it comprises connection means (9), configured to connect said at least one clamping element (10), said bottom wall (4) and said abutment portion (8) to each other so that said bottom wall (4) remains clamped between said at least one clamping element (10) and said abutment portion (8), said connection means being accessible from inside said housing volume (3).

6. Device according to the preceding claim, **characterized in that** said connection means (9) comprise at least one mechanical constraint member which crosses said at least one clamping element (10) and said bottom wall (4) to engage in a corresponding hole (29) formed in said abutment portion (8) of said unit (5).

7. Device according to one or more of the preceding claims, **characterized in that** said at least one clamping element (10) is made of a more rigid material than said bottom wall (4).

8. Device according to one or more of the preceding claims, **characterized in that** said sensor means (11), mounted on said at least one unit (5) for the passage of said fluid, are equipped with electrical connection means (14) placed crossing said bottom wall (4) of containment structure (2) and said at least one clamping element (10).

9. Device according to one or more of the preceding claims, **characterized in that** said unit (5) is made of metallic material, preferably brass, while said containment structure is made of polymeric material.

10. Device according to one or more of the preceding claims, **characterized in that** said sensor means (11) comprise at least one pair of ultrasonic sensors (11', 11"), which are configured to measure the flow rate of the fluid through the duct (50) of said unit (5), each of said ultrasonic sensors (11', 11") being housed in a corresponding seat (12) formed in the abutment portion (8).

11. Device according to one or more of the preceding claims, **characterized in that**:
- said bottom wall (4) of said containment structure (2) is equipped with at least one first through opening (13) formed in correspondence with said sensor means (11) and crossed by electrical connection means (14), electrically connected to said sensor means (11),
- said at least one clamping element (10) is equipped with at least one second through opening (15) at least partially facing said first through opening (13) and crossed by said electrical connection means (14), so as to allow connection with at least an electronic control unit housed inside said housing volume (3) of said containment structure (2).

12. Device according to one or more of the preceding claims, **characterized in that** it comprises at least one further element (16) which is housed in a second seat (17) formed in said abutment portion (8) of said unit (5) and which it is blocked inside the second seat (17) by said bottom wall (4) of said containment structure (2).

13. Device according to the preceding claim, **characterized in that** said further element (16) comprises a sensor configured to detect and/or measure a characteristic or property of the fluid flowing in the duct (50) of said unit.

14. Device according to one or more of the preceding claims, **characterized in that** it comprises sealing member (35), preferably of the O-ring type, which are inserted inside the respective seat (12) for housing the sensor means (11) and which are compressed as a result of the clamping of said bottom wall (4) between said at least one clamping element (10) and said abutment portion (8) of said unit (5), to thus allow sealing with respect to the circulating fluid inside the duct (50) of said unit (5) and which brushes against the surface of the sensor means (11) facing the inside of said duct (50).

15. Device according to one or more of the preceding claims, **characterized in that** it comprises insulation means (25), preferably comprising gasket means (25A, 25B) and/or a sealing product, which are interposed between the second surface of the wall bottom (4) of the containment structure (2) and the abutment portion (8) of the unit (5), and preferably they are interposed between the outer surface of the abutment portion (8) which surrounds said seats (12) and a receiving zone defined in/by the second surface of the bottom wall (4) which surrounds a corresponding through opening (13) of the bottom wall (4), and which are configured to insulate the internal housing volume (3) of the containment (2) from the external environment.

## Patentansprüche

1. Vorrichtung (1) zum Messen eines Fluids, vorzugsweise einer Flüssigkeit, insbesondere des Typs, der zum Messen der Flussrate und/oder des Flusses eines Fluids geeignet ist, das innerhalb eines Kanals und durch die Vorrichtung selbst zirkuliert, wobei die Vorrichtung (1) Folgendes umfasst:
- mindestens eine Rückhaltestruktur (2), die im Inneren ein Gehäusevolumen (3) definiert und eine Bodenwand (4) umfasst, die mit einer ersten Fläche bereitgestellt ist, die im Hinblick auf das Gehäusevolumen (3) nach innen gerichtet ist, und einer zweiten Fläche, die im Hinblick auf das Gehäusevolumen (3) nach außen gerichtet ist, wobei die Rückhaltestruktur (2) dicht ist, um das Auslaufen von Flüssigkeit nach außen und/oder das Eindringen von Flüssigkeit von außen in das Innere des Gehäusevolumens (3) zu verhindern;
- mindestens eine Einheit (5) für den Durchfluss des Fluids, umfassend:
- einen Kanal (50), der im Inneren einen Pfad (5') begrenzt, der sich entlang einer Flussrichtung (X) zwischen einem Einlassanschluss (6) für das Fluid und einer Auslassöffnung (7) für das Fluid erstreckt, und
- mindestens einen Anschlagabschnitt (8), der mechanisch mit der Bodenwand (4) der Rückhaltestruktur (2) an der zweiten Fläche verbunden werden kann;
- mindestens ein Klemmelement (10), das innerhalb des Gehäusevolumens (3) der Rückhaltestruktur (2) untergebracht ist, so dass es von außerhalb der Rückhaltestruktur (2) nicht zugänglich ist;
- Sensormittel (11), die sich strukturell von dem mindestens einen Klemmelement (10) unterscheiden und die konfiguriert sind, um mindestens eine Flussrate und/oder einen Fluss des Fluids zu messen, das durch den Kanal (50) der Einheit (5) fließt,
und wobei:
- die Bodenwand (4) zwischen dem mindestens einen Klemmelement (10) und dem Anschlagabschnitt (8) der Einheit (5) eingeklemmt ist,
- der mindestens eine Anschlagabschnitt (8) in direktem Kontakt mit der Bodenwand (4) der Rückhaltestruktur (2) steht,
- die Sensormittel (11) ganz oder größtenteils in entsprechenden Sitzen (12) montiert sind, die in dem mindestens einen Anschlagabschnitt (8) der Einheit (5) für den Durchfluss des Fluids erhalten werden und innerhalb der entsprechenden Sitze (12) durch die Bodenwand (4) der Rückhaltestruktur (2) und/oder durch das mindestens eine Klemmelement (10) blockiert werden.

2. Vorrichtung nach Anspruch 1, **dadurch gekennzeichnet, dass** das mindestens eine Klemmelement (10) nur mit der ersten Fläche der Bodenwand (4) in Kontakt gebracht wird, während die Sensormittel (11) nur mit der zweiten Fläche der Bodenwand (4) in Kontakt gebracht werden, so dass es keinen direkten Kontakt zwischen dem mindestens einen Klemmelement (10) und den Sensormitteln (11) gibt.

3. Vorrichtung nach Anspruch 1 oder 2, **dadurch gekennzeichnet, dass** das mindestens eine Klemmelement (10) mindestens eine geformte Platte umfasst, die in Anschlag/Kontakt mit der ersten Fläche der Bodenwand (4) der Rückhaltestruktur (2) gebracht wird.

4. Vorrichtung nach Anspruch 1, **dadurch gekennzeichnet, dass** das mindestens eine Klemmelement (10) direkt in den Anschlagabschnitt (8) der Einheit (5) eingreift und vorzugsweise so konfiguriert ist, dass es zum Einschrauben in einen entsprechenden Sitz (12) eingreift, der in dem Anschlagabschnitt (8) ausgebildet ist, um die Sensormittel (11) aufzunehmen.

5. Vorrichtung nach einem oder mehreren der vorstehenden Ansprüche 1 - 3, **dadurch gekennzeichnet, dass** sie Verbindungsmittel (9) umfasst, die so konfiguriert sind, dass sie das mindestens eine Klemmelement (10), die Bodenwand (4) und den Anschlagabschnitt (8) miteinander verbinden, so dass die Bodenwand (4) zwischen dem mindestens einen Klemmelement (10) und dem Anschlagabschnitt (8) eingeklemmt bleibt, wobei die Verbindungsmittel vom Inneren des Gehäusevolumens (3) zugänglich sind.

6. Vorrichtung nach dem vorstehenden Anspruch, **dadurch gekennzeichnet, dass** die Verbindungsmittel (9) mindestens ein mechanisches Rückhalteelement umfassen, das das mindestens eine Klemmelement (10) und die Bodenwand (4) kreuzt, um in ein entsprechendes Loch (29) einzugreifen, das in dem Anschlagabschnitt (8) der Einheit (5) ausgebildet ist.

7. Vorrichtung nach einem oder mehreren der vorstehenden Ansprüche, **dadurch gekennzeichnet, dass** das mindestens eine Klemmelement (10) aus einem steiferen Material als die Bodenwand (4) hergestellt ist.

8. Vorrichtung nach einem oder mehreren der vorstehenden Ansprüche, **dadurch gekennzeichnet, dass** die an der mindestens einen Einheit (5) für den Durchfluss des Fluids montierten Sensormittel (11) mit elektrischen Verbindungsbauteilen (14) ausgestattet sind, die die Bodenwand (4) der Rückhaltestruktur (2) und das mindestens eine Klemmelement (10) kreuzen.

9. Vorrichtung nach einem oder mehreren der vorstehenden Ansprüche, **dadurch gekennzeichnet, dass** die Einheit (5) aus einem metallischen Material, vorzugsweise Messing, hergestellt ist, während die Rückhaltestruktur aus einem polymeren Material hergestellt ist.

10. Vorrichtung nach einem oder mehreren der vorstehenden Ansprüche, **dadurch gekennzeichnet, dass** die Sensormittel (11) mindestens ein Paar Ultraschallsensoren (11', 11") umfassen, die konfiguriert sind, um die Flussrate des Fluid durch den Kanal (50) der Einheit (5) zu messen, wobei jeder der Ultraschallsensoren (11', 11") in einem entsprechenden Sitz (12) untergebracht ist, der in dem Anschlagabschnitt (8) ausgebildet ist.

11. System nach einem oder mehreren der vorstehenden Ansprüche, **dadurch gekennzeichnet, dass**:
- die Bodenwand (4) der Rückhaltestruktur (2) mit mindestens einer ersten Durchgangsöffnung (13) ausgestattet ist, die in Übereinstimmung mit den Sensormitteln (11) gebildet und von elektrischen Verbindungsmitteln (14) gekreuzt wird, die elektrisch mit den Sensormitteln (11) verbunden sind,
- das mindestens eine Klemmelement (10) mit mindestens einer zweiten Durchgangsöffnung (15) ausgestattet ist, die mindestens teilweise der ersten Durchgangsöffnung (13) gegenüberliegt und von den elektrischen Verbindungsmitteln (14) gekreuzt wird, um eine Verbindung mit mindestens einer elektronischen Steuerungseinheit zu ermöglichen, die in dem Gehäusevolumen (3) der Rückhaltestruktur (2) untergebracht ist.

12. Vorrichtung nach einem oder mehreren der vorstehenden Ansprüche, **dadurch gekennzeichnet, dass** sie mindestens ein weiteres Element (16) umfasst, das in einem zweiten Sitz (17) untergebracht ist, der in dem Anschlagabschnitt (8) der Einheit (5) ausgebildet ist, und das innerhalb des zweiten Sitzes (17) durch die Bodenwand (4) der Rückhaltestruktur (2) blockiert ist.

13. Vorrichtung nach dem vorstehenden Anspruch, **dadurch gekennzeichnet, dass** das weitere Element (16) einen Sensor umfasst, der konfiguriert ist, um ein Merkmal oder eine Eigenschaft des im Kanal (50) der Einheit strömenden Fluids zu erkennen und/oder zu messen.

14. Vorrichtung nach einem oder mehreren der vorstehenden Ansprüche, **dadurch gekennzeichnet, dass** sie Dichtungselemente (35), vorzugsweise vom O-Ring-Typ, umfasst, die in den jeweiligen Sitz (12) zur Aufnahme der Sensormittel (11) eingeführt sind und die infolge des Einklemmens der Bodenwand (4) zwischen dem mindestens einen Klemmelement (10) und dem Anschlagabschnitt (8) der Einheit (5) komprimiert werden, um auf diese Weise eine Dichtung im Hinblick auf das zirkulierende Fluid im Inneren des Kanals (50) der Einheit (5) zu ermöglichen, die gegen die Fläche der Sensormittel (11) stößt, die dem Inneren des Kanals (50) zugewandt ist.

15. Vorrichtung nach einem oder mehreren der vorstehenden Ansprüche, **dadurch gekennzeichnet, dass** sie Isoliermittel (25) umfasst, die vorzugsweise Dichtungsmittel (25A, 25B) und/oder ein Dichtungsprodukt umfassen, die zwischen der zweiten Oberfläche des Wandbodens (4) der Rückhaltestruktur (2) und dem Anschlagabschnitt (8) der Einheit (5) zwischengesetzt sind, und vorzugsweise zwischen die äußere Fläche des Bodenabschnitts (8), der die Sitze (12) umgibt, und eine Aufnahmezone, die in/von der zweiten Fläche der Bodenwand (4) definiert ist, die eine entsprechende Durchgangsöffnung (13) der Bodenwand (4) umgibt, zwischengesetzt sind, und die konfiguriert sind, um das innere Gehäusevolumen (3) der Rückhaltestruktur (2) von der äußeren Umgebung zu isolieren.

## Revendications

1. Dispositif (1) pour la mesure d'un fluide, de préférence un liquide, en particulier du type approprié pour la mesure du débit et/ou de l'écoulement d'un fluide circulant à l'intérieur d'un conduit et à travers le dispositif lui-même, dans lequel ledit dispositif (1) comprend :
- au moins une structure de confinement (2), définissant intérieurement un volume de logement (3) et comprenant une paroi de fond (4), qui est munie d'une première surface faisant face vers l'intérieur par rapport audit volume de logement (3) et d'une seconde surface faisant face vers l'extérieur par rapport audit volume de logement (3), la structure de confinement (2) étant étanche pour empêcher une fuite de liquide vers l'extérieur et/ou l'entrée de liquide depuis l'extérieur dans l'intérieur du volume de logement (3) ;
- au moins une unité (5) pour le passage dudit fluide, comprenant :
- un conduit (50) délimitant intérieurement un chemin (5') s'étendant le long d'une direction d'écoulement (X) entre un orifice d'entrée (6) pour ledit fluide et une ouverture de sortie (7) pour ledit fluide, et
- au moins une partie de butée (8) qui peut être mécaniquement reliée à ladite paroi de fond (4) de ladite structure de confinement (2) au niveau de ladite seconde surface ;
- au moins un élément de serrage (10) qui est logé à l'intérieur dudit volume de logement (3) de ladite structure de confinement (2) de façon à ne pas être accessible depuis l'extérieur de ladite structure de confinement (2) ;
- des moyens capteurs (11) qui sont structurellement distincts dudit au moins un élément de serrage (10) et qui sont configurés pour mesurer au moins un débit et/ou écoulement du fluide traversant le conduit (50) de ladite unité (5),
et dans lequel :
- ladite paroi de fond (4) est serrée entre ledit au moins un élément de serrage (10) et ladite partie de butée (8) de ladite unité (5),
- ladite au moins une partie de butée (8) est en contact direct avec la paroi de fond (4) de la structure de confinement (2),
- lesdits moyens capteurs (11) sont montés, entièrement ou pour la majeure partie, dans des sièges (12) correspondants obtenus dans ladite au moins une partie de butée (8) de l'unité (5) pour le passage dudit fluide et étant bloqués à l'intérieur des sièges (12) correspondants par ladite paroi de fond (4) de ladite structure de confinement (2) et/ou par ledit au moins un élément de serrage (10).

2. Dispositif selon la revendication 1, **caractérisé en ce que** ledit au moins un élément de serrage (10) est en contact uniquement avec la première surface de la paroi de fond (4), tandis que les moyens capteurs (11) sont en contact uniquement avec la seconde surface de la paroi de fond (4), de sorte qu'il n'y ait pas de contact direct entre ledit au moins un élément de serrage (10) et les moyens capteurs (11).

3. Dispositif selon les revendications 1 ou 2, **caractérisé en ce que** ledit au moins un élément de serrage (10) comprend au moins une plaque façonnée placée en butée/contact contre ladite première surface de ladite paroi de fond (4) de ladite structure de confinement (2).

4. Dispositif selon la revendication 1, **caractérisé en ce que** ledit au moins un élément de serrage (10) se met directement en prise avec la partie de butée (8) de l'unité (5) et, de préférence, est configuré pour être mis en prise pour un vissage à l'intérieur d'un siège (12) correspondant, formé dans ladite partie de butée (8), pour le logement desdits moyens capteurs (11).

5. Dispositif selon l'une ou plusieurs des revendications 1 à 3 précédentes, **caractérisé en ce qu'**il comprend des moyens de liaison (9), configurés pour relier ledit au moins un élément de serrage (10), ladite paroi de fond (4) et ladite partie de butée (8) les uns aux autres de sorte que ladite paroi de fond (4) reste serrée entre ledit au moins un élément de serrage (10) et ladite partie de butée (8), lesdits moyens de liaison étant accessibles depuis l'intérieur dudit volume de logement (3).

6. Dispositif selon la revendication précédente, **caractérisé en ce que** lesdits moyens de liaison (9) comprennent au moins un organe de contrainte mécanique qui traverse ledit au moins un élément de serrage (10) et ladite paroi de fond (4) pour se mettre en prise dans un trou (29) correspondant formé dans ladite partie de butée (8) de ladite unité (5).

7. Dispositif selon l'une ou plusieurs des revendications précédentes, **caractérisé en ce que** ledit au moins un élément de serrage (10) est constitué d'un matériau plus rigide que ladite paroi de fond (4).

8. Dispositif selon l'une ou plusieurs des revendications précédentes, **caractérisé en ce que** lesdits moyens capteurs (11), montés sur ladite au moins une unité (5) pour le passage dudit fluide, sont équipés de moyens de connexion électrique (14) placés en travers de ladite paroi de fond (4) de structure de confinement (2) et dudit au moins un élément de serrage (10).

9. Dispositif selon l'une ou plusieurs des revendications précédentes, **caractérisé en ce que** ladite unité (5) est constituée de matériau métallique, de préférence de laiton, tandis que ladite structure de confinement est constituée de matériau polymère.

10. Dispositif selon l'une ou plusieurs des revendications précédentes, **caractérisé en ce que** lesdits moyens capteurs (11) comprennent au moins une paire de capteurs à ultrasons (11', 11"), qui sont configurés pour mesurer le débit du fluide à travers le conduit (50) de ladite unité (5), chacun desdits capteurs à ultrasons (11', 11") étant logé dans un siège (12) correspondant formé dans la partie de butée (8).

11. Dispositif selon l'une ou plusieurs des revendications précédentes, **caractérisé en ce que** :
- ladite paroi de fond (4) de ladite structure de confinement (2) est équipée d'au moins une première ouverture traversante (13) formée en correspondance desdits moyens capteurs (11) et traversée par des moyens de connexion électrique (14), électriquement connectés auxdits moyens capteurs (11),
- ledit au moins un élément de serrage (10) est équipé d'au moins une seconde ouverture traversante (15) faisant au moins partiellement face à ladite première ouverture traversante (13) et traversée par lesdits moyens de connexion électrique (14), de façon à permettre une connexion avec au moins une unité de commande électronique logée à l'intérieur dudit volume de logement (3) de ladite structure de confinement (2).

12. Dispositif selon l'une ou plusieurs des revendications précédentes, **caractérisé en ce qu'**il comprend au moins un élément supplémentaire (16) qui est logé dans un second siège (17) formé dans ladite partie de butée (8) de ladite unité (5) et qui est bloqué à l'intérieur du second siège (17) par ladite paroi de fond (4) de ladite structure de confinement (2).

13. Dispositif selon la revendication précédente, **caractérisé en ce que** ledit élément supplémentaire (16) comprend un capteur configuré pour détecter et/ou mesurer une caractéristique ou une propriété du fluide s'écoulant dans le conduit (50) de ladite unité.

14. Dispositif selon l'une ou plusieurs des revendications précédentes, **caractérisé en ce qu'**il comprend un organe d'étanchéité (35), de préférence du type joint torique, qui est inséré à l'intérieur du siège (12) respectif pour le logement des moyens capteurs (11) et qui est comprimé en conséquence du serrage de ladite paroi de fond (4) entre ledit au moins un élément de serrage (10) et ladite partie de butée (8) de ladite unité (5), pour ainsi permettre une étanchéité par rapport au fluide en circulation à l'intérieur du conduit (50) de ladite unité (5) et qui frotte contre la surface des moyens capteurs (11) faisant face à l'intérieur dudit conduit (50).

15. Dispositif selon l'une ou plusieurs des revendications précédentes, **caractérisé en ce qu'**il comprend des moyens d'isolation (25), comprenant de préférence des moyens de garniture (25A, 25B) et/ou un produit d'étanchéité, qui sont interposés entre la seconde surface de la paroi de fond (4) de la structure de confinement (2) et la partie de butée (8) de l'unité (5), et de préférence ils sont interposés entre la surface externe de la partie de butée (8) qui encercle lesdits sièges (12) et une zone de réception définie dans/par la seconde surface de la paroi de fond (4) qui encercle une ouverture traversante (13) correspondante de la paroi de fond (4), et qui sont configurés pour isoler le volume de logement (3) intérieur du confinement (2) vis-à-vis de l'environnement extérieur.
